# EUROPÄISCHE PATENTSCHRIFT

(11) **EP 3 750 618 B1**
(45) Veröffentlichungstag und Bekanntmachung des Hinweises auf die Patenterteilung: **20.03.2024**
(21) Anmeldenummer: 19179670.5
(22) Anmeldetag: 12.06.2019
(51) Int. Cl.: B01D 53/86, F28D 17/02, F28D 17/04

(54) **VERFAHREN ZUR REINIGUNG VON ABGASEN**
METHOD FOR PURIFYING WASTE GASES
PROCÉDÉ DE NETTOYAGE DE GAZ D'ÉCHAPPEMENT

(43) Veröffentlichungstag der Anmeldung: 16.12.2020
(73) Patentinhaber: CTP Chemisch Thermische Prozesstechnik GmbH, 8042 Graz (AT)
(72) Erfinder: Mülleder, Christian, 8074 Raaba-Grambach (AT)
(74) Vertreter: Puchberger & Partner Patentanwälte

(56) Entgegenhaltungen:
- EP-A2- 1 593 909
- DE-A1- 19 905 733
- DE-A1-102017 101 507
- US-A- 5 538 420
- US-A- 5 888 063

## Beschreibung

Die Erfindung betrifft ein Verfahren gemäß dem Oberbegriff des unabhängigen Patentanspruchs.

Bei herkömmlichen, aus dem Stand der Technik bekannten, Abgasreinigungsanlagen mit regenerativem Wärmetausch muss die Durchströmungsrichtung, bedingt durch deren Funktionsprinzip, zyklisch umgekehrt werden. Durch diese Umkehrung verringert sich die Reinigungsleistung der Abgasreinigungsanlagen, sofern nicht der Regenerator, welcher zuletzt mit dem ungereinigten Abgas durchströmt wurde, zuvor mit Spülgas gespült wird, bevor dieser Regenerator mit dem gereinigten Abgas beaufschlagt wird.

Aus dem Stand der Technik sind nun unterschiedliche Verfahren zur Reinigung von Abgasen mit Abgasreinigungsanlagen bekannt, welche derartige Regeneratoren umfassen. Beispielsweise sind Verfahren bekannt, bei denen der Regenerator mit Reingas aus der Brennkammer, mit bereits rückgekühltem Reingas oder mit Umgebungsluft gespült wird. Nachteilig an solch herkömmlichen Verfahren ist aber, dass das Spülgas über die gesamte Spülzeit in eine Richtung durch den zu spülenden Regenerator strömt. Dadurch sinkt der Gesamtwirkungsgrad der Abgasreinigungsanlage, da es effektiv zu einer um den Spülluft-Massenstrom erhöhten Nutzung der Wärmespeichermasse der Abgasreinigungsanlage kommt.

Herkömmliche Verfahren sind unter anderem aus der EP 1 593 909 A2, der DE 199 05 733 A1, der US 5,888,063 A, der DE 10 2017 101 507 A1 und der US 5,538,420 bekannt.

Aufgabe der Erfindung ist es, die Nachteile des Standes der Technik zu überwinden und eine effizientere Abgasreinigung zu ermöglichen. Insbesondere ist es Aufgabe der Erfindung ein Verfahren zu schaffen, mit welchem der Gesamtwirkungsgrad der Abgasreinigungsanlage erhöht werden kann, ohne die Reinigungseffizienz maßgeblich zu verringern.

Die erfindungsgemäße Aufgabe wird insbesondere durch die Merkmale des unabhängigen Patentanspruchs gelöst.

Die Erfindung betrifft ein Verfahren zur Reinigung von Abgas mit einer Abgasreinigungsanlage, wobei die Abgasreinigungsanlage mindestens drei mit einer Reaktionskammer verbundene, wärmespeichernde Regeneratoren umfasst, wobei das Abgas in Zyklen wechselweise den Regeneratoren zugeführt wird, und wobei ein Zyklus des Verfahrens folgende Schritte umfasst: Zuführen des Abgases zur Reaktionskammer durch mindestens einen Regenerator, welcher in einem vorhergehenden Zyklus erwärmt worden ist, um das Abgas in der Reaktionskammer zu Reingas umzusetzen, Abführen des Reingases aus der Abgasreinigungsanlage durch mindestens einen weiteren Regenerator, wodurch der mindestens eine weitere Regenerator erwärmt wird, und Spülen mindestens eines anderen weiteren Regenerators mit Spülgas, insbesondere mit Reingas, um eine Verunreinigung des Reingases in einem nachfolgenden Zyklus zu vermeiden.

Es werden in einem Zyklus somit mindestens drei Regeneratoren mit Gas durchströmt:
- Mindestens ein Regenerator wird mit Abgas durchströmt, sodass das Abgas nach dem Durchströmen dieses Regenerators in die Reaktionskammer eintritt und dort zu Reingas umgesetzt werden kann.
- Mindestens ein weiterer Regenerator wird mit aus der Reaktionskammer austretendem Reingas durchströmt.
- Ein anderer weiterer Regenerator, nämlich der zu spülende Regenerator, wird während des Zyklus mit Spülgas gespült.

Erfindungsgemäß ist vorgesehen, dass während des Zyklus die Strömungsrichtung des Spülgases mindestens einmal umgekehrt wird.

Erfindungsgemäß umfasst die Abgasreinigungsanlage drei oder mehrere Regeneratoren, welche über eine Reaktionskammer miteinander verbunden sind.

Im Rahmen der vorliegenden Erfindung kann unter einem Regenerator ein Wärmeübertrager mit einem Wärmespeicher bzw. einer Speichermasse verstanden werden. Die Regeneratoren können abwechselnd von einem wärmeren und einem weniger warmen Gas durchströmt werden. Dabei kann die Wärme von dem wärmeren Gas, insbesondere von dem in der Reaktionskammer gereinigten Abgas, insbesondere dem Reingas, auf den Wärmespeicher übertragen werden, um anschließend wieder an das den erwärmten Wärmespeicher durchströmende, weniger warme ungereinigte Gas, insbesondere das Abgas, abgegeben zu werden.

Im Rahmen der vorliegenden Erfindung kann unter Reaktionskammer eine Brennkammer und/oder ein Reaktionsraum verstanden werden, in welcher/m das Abgas zu Reingas umgesetzt werden kann.

Erfindungsgemäß wird den Regeneratoren das Abgas in Zyklen wechselweise zugeführt.

Im Rahmen der vorliegenden Erfindung kann unter einem Zyklus jene Prozessphase verstanden werden, in welcher das zu reinigende Abgas bei der Zuführung zur Reaktionskammer durch mindestens einen bestimmten Regenerator eingebracht wird, ohne dabei seine Strömungsrichtung in eben diesem Regenerator umzukehren. Mit anderen Worten kann beispielsweise in einem ersten Zyklus das Abgas über mindestens einen ersten Regenerator zur Reaktionskammer strömen und in einem zweiten Zyklus kann das Abgas über mindestens einen zweiten Regenerator zur Reaktionskammer strömen.

Erfindungsgemäß wird das Abgas in einem Zyklus durch mindestens einen Regenerator, welcher in einem vorhergehenden Zyklus erwärmt worden ist, der Reaktionskammer zugeführt.

Ferner wird bevorzugt in demselben Zyklus das Reingas durch mindestens einen weiteren Regenerator, welcher in einem vorhergehenden Zyklus gespült worden ist, aus der Abgasreinigungsanlage abgeführt.

Dadurch, dass gegebenenfalls das heiße Reingas direkt aus der Reaktionskammer durch den mindestens einen weiteren Regenerator strömt, wird der mindestens eine weitere Regenerator erwärmt. In einem nachfolgenden Zyklus, insbesondere in dem anschließenden Zyklus, kann der mindestens eine weitere erwärmte Regenerator mit dem der Abgasreinigungsanlage zugeführten Abgas durchströmt werden, wodurch das Abgas vorgewärmt in die Reaktionskammer eintritt. Durch die wechselweise Zuführung des Abgases in die Regeneratoren kann der thermische Wirkungsgrad eines Regenerators zustande kommen. Ferner kann durch die wechselweise Zuführung der Wirkungsgrad, insbesondere der energetische Wirkungsgrad, der Abgasreinigungsanlage erhöht werden.

Ferner wird bevorzugt in demselben Zyklus mindestens ein Regenerator, welcher in einem vorhergehenden Zyklus mit Abgas durchströmt wurde, mit Spülgas gespült. Durch die Spülung kann das Abgas aus dem zu spülenden Regenerator entfernt werden. In einem nachfolgenden Zyklus, insbesondere dem anschließenden Zyklus, kann der mindestens eine gespülte Regenerator mit Reingas durchströmt werden, ohne dass das Reingas verunreinigt wird.

Erfindungsgemäß ist vorgesehen, dass während eines Zyklus die Strömungsrichtung des Spülgases, insbesondere in dem zu spülenden Regenerator, mindestens einmal umgekehrt wird.

Dadurch ist es erfindungsgemäß möglich, den gespülten Regenerator, insbesondere dessen Speichermasse, während eines Zyklus als Wärmespeicher für den Wärmetausch zu nutzen. Erfindungsgemäß ist vorgesehen, dass der Regenerator zur Spülung während eines Zyklus bei der Durchströmung in eine erste Strömungsrichtung Wärme aus dem Spülgas aufnimmt und bei der Durchströmung in eine zweite Strömungsrichtung wieder Wärme an das Spülgas abgibt. Insbesondere ist vorgesehen, dass dadurch die vom Spülgas an den Regenerator abgegebene Wärme im Wesentlichen vollständig in die Reaktionskammer zurückgeführt wird.

Bevorzugt ist vorgesehen, dass die erste Strömungsrichtung des Spülgases der zweiten Strömungsrichtung des Spülgases entgegengesetzt ist. Gegebenenfalls ist vorgesehen, dass die Strömungsrichtung zur Spülung mindestens eines Regenerators mehrmals während eines Zyklus geändert, insbesondere umgekehrt, wird

Gegebenenfalls ist vorgesehen, dass die einzelnen Verfahrensschritte des Verfahrens während eines Zyklus im Wesentlichen gleichzeitig ablaufen. In diesem Fall kann vorgesehen sein, dass, während der mindestens eine Regenerator mit Abgas durchströmt wird, der mindestens eine weitere Regenerator im Wesentlichen zeitgleich mit zu Reingas umgesetztem Abgas durchströmt wird. Ferner kann, während die jeweiligen Regeneratoren während des Zyklus mit Abgas und Reingas durchströmt werden, der mindestens eine andere weitere Regenerator für eine Spülzeit mit Spülgas gespült werden, wobei bevorzugt die Strömungsrichtung dieser Spülung während dieses Zyklus geändert und insbesondere umgekehrt wird.

Insbesondere bei Abgasreinigungsanlagen, welche fünf oder sieben Regeneratoren umfassen, wird der zu spülende Regenerator für die Hälfte oder ein Drittel der Zykluszeit gespült. Die Spülzeit entspricht bevorzugt der sogenannten Turmweiterschaltung. Gegebenenfalls kann nach der Hälfte der Spülzeit, insbesondere der Hälfte der sogenannten Turmweiterschaltung, die Spülrichtung umgekehrt werden. Gegebenenfalls kann das Verfahren bei Abgasreinigungsanlagen angewandt werden, welche drei, fünf, sieben, neun oder mehr mit einer Reaktionskammer verbundene, wärmespeichernde Regeneratoren umfassen.

Dabei können jeweils ein, zwei oder ein Vielfaches von zwei Regeneratoren zur Zufuhr des Abgases zur Reaktionskammer und ein, zwei oder ein Vielfaches von zwei

Regeneratoren zum Abziehen des Reingases aus der Reaktionskammer parallel geschaltet werden.

In allen Ausführungsformen ist bevorzugt vorgesehen, dass das erfindungsgemäße Verfahren automatisiert, insbesondere durch eine Steuerung der Abgasreinigungsanlage gesteuert und/oder geregelt, ausgeführt wird.

Gegebenenfalls ist vorgesehen, dass in einem Zyklus mehrere Regeneratoren gespült werden.

Erfindungsgemäß ist vorgesehen, dass der Regenerator, während eines Zyklus, zur Spülung zuerst von der Reaktionskammer in Richtung seines Reingasauslasses mit Spülgas durchströmt wird, und dass derselbe Regenerator während desselben Zyklus zur Spülung danach oder anschließend von dem Reingasauslass in Richtung der Reaktionskammer mit Spülgas durchströmt wird.

Gegebenenfalls ist vorgesehen, dass der Regenerator, während eines Zyklus, zur Spülung zuerst mit, insbesondere ungekühltem, Reingas direkt aus der Reaktionskammer gespült wird.

Gegebenenfalls ist vorgesehen, dass derselbe Regenerator während desselben Zyklus zur Spülung danach oder anschließend mit aus der Abgasreinigungsanlage abgeführtem, insbesondere durch den mindestens einen weiteren Regenerator gekühltem, Reingas gespült wird, und/oder dass derselbe Regenerator während desselben Zyklus zur Spülung danach oder anschließend mit, insbesondere aus der Umgebung, zugeführter Frischluft gespült wird.

Im Rahmen der vorliegenden Erfindung kann unter Reingasauslass der Auslass des Reingases des jeweiligen Regenerators verstanden werden. Mit anderen Worten kann das Reingas über den Reingasauslass aus dem Regenerator in die Reingasleitung und/oder in die Umgebung abgeführt werden. Insbesondere kann eine Reingasabsperrvorrichtung in der Nähe des Reingasauslasses angeordnet sein und/oder der Reingasauslass die Reingasabsperrvorrichtung umfassen.

Im Rahmen der vorliegenden Erfindung kann unter dem Reingas, welches den zu spülenden Regenerator direkt von der Reaktionskammer durchströmt, ein Reingas verstanden werden, welches ungekühlt in den zu spülenden Regenerator eintritt. Mit anderen Worten kann es sich bei diesem ungekühlten Reingas um ein Reingas handeln, welches beim Eintritt in den zu spülenden Regenerator noch nicht durch einen Regenerator geströmt ist.

Im Rahmen der vorliegenden Erfindung kann unter dem Reingas, welches zuerst aus der Abgasreinigungsanlage abgeführt wird und anschließend den zu spülenden Regenerator durchströmt, ein Reingas verstanden werden, welches gekühlt in den zu spülenden Regenerator eintritt. Mit anderen Worten kann es sich bei diesem gekühlten Reingas um ein Reingas handeln, welches vor dem Eintritt in den zu spülenden Regenerator bereits durch mindestens einen Regenerator geströmt ist.

Gegebenenfalls kann der mindestens eine andere weitere Regenerator, während eines Zyklus, zur Spülung zuerst mit direkt aus der Reaktionskammer stammendem, insbesondere ungekühltem, Reingas durchströmt werden. Hierbei kann das ungekühlte Reingas direkt von der Reaktionskammer durch den zu spülenden Regenerator strömen und anschließend wieder der Abgasreinigungsanlage zur Reinigung zugeführt werden.

Das ungekühlte Reingas kann bei der Durchströmung des mindestens einen Regenerators Wärme an diesen abgeben, wodurch dieser Regenerator erwärmt und das ungekühlte Reingas gekühlt werden kann.

Gegebenenfalls kann der erwärmte zu spülende Regenerator während desselben Zyklus zur Spülung mit gekühltem Reingas durchströmt werden, wodurch das gekühlte Reingas Wärme von diesem Regenerator aufnehmen kann. Mit anderen Worten kann das gekühlte Reingas bei der Durchströmung des erwärmten zu spülenden Regenerators Wärme von diesem aufnehmen, wodurch der erwärmte zu spülende Regenerator gekühlt und das gekühlte Reingas erwärmt wird.

Durch diese Erwärmung kann das Reingas erwärmt in die Reaktionskammer eintreten und somit die Wärme, welche bei der Durchströmung des ungekühlten Reingases von dem zu spülenden Regenerator aufgenommen wurde, im Wesentlichen vollständig in die Reaktionskammer zurückführen. Dadurch kann der Wirkungsgrad der Abgasreinigungsanlage erhöht werden.

Gegebenenfalls kann als Spülgas ein Teilstrom des ungekühlten Reingases verwendet werden, welches direkt aus der Reaktionskammer austritt. Insbesondere wird das ungekühlte Reingas von der Reaktionskammer über den zu spülende Regenerator in Richtung des Reingasauslasses geführt. Dabei kann das im Regenerator enthaltene Abgas über mindestens eine Spülluftklappe und/oder mindestens eine Spülgasleitung in das Abgas stromauf der Abluftreinigungsanlage geleitet, insbesondere gespült, werden. In diesem Fall kann das aus dem Regenerator gespülte Abgas und das durch das Abgas verunreinigte Spülgas wieder der Abgasreinigungsanlage zugeführt und in weitere Folge zu Reingas umgesetzt werden.

Gegebenenfalls kann als Spülgas ein Teilstrom des gekühlten Reingases verwendet werden, welches aus mindestens einem Regenerator austritt. Insbesondere wird das gekühlte Reingas von dem Reingasauslass des zu spülende Regenerators in Richtung der Reaktionskammer geführt. Dabei kann das im Regenerator enthaltene Abgas und/oder das verunreinigte Spülgas in die Reaktionskammer gespült werden, in welcher das aus dem Regenerator gespülte Abgas und durch das Abgas verunreinigte Spülgas zu Reingas umgesetzt werden kann.

Gegebenenfalls kann der erwärmte zu spülende Regenerator während eines oder desselben Zyklus zur Spülung auch mit Umgebungsluft durchströmt werden.

Gegebenenfalls ist vorgesehen, dass der Regenerator in eine Strömungsrichtung, insbesondere in die Richtung seines Reingasauslasses, mit einem Spülvielfachen von größer gleich 1, insbesondere mit einem Spülvielfachen von 1,5 bis einschließlich 20, gespült wird, und dass derselbe Regenerator, insbesondere nach Ablauf der halben Spülzeit, in eine andere, insbesondere in eine zu der Strömungsrichtung entgegengesetzte, Strömungsrichtung, insbesondere in die Richtung der Reaktionskammer, mit einem Spülvielfachen von größer gleich 1, insbesondere mit einem Spülvielfachen von 1,5 bis einschließlich 20, gespült wird.

Im Rahmen der vorliegenden Erfindung kann unter dem Spülvielfachen ein Vielfaches des Regeneratorvolumens, insbesondere ein Vielfaches des durchströmbaren Regeneratorvolumens, verstanden werden. Mit anderen Worten kann ein Spülvielfaches von 1 bedeuten, dass der Regenerator mit einem Spülgasvolumen gespült wurde, welches im Wesentlichen dem, insbesondere freien, Regeneratorvolumen entspricht. Das freie Regeneratorvolumen kann im Wesentlichen dem Regenerator, dem Tragrost, dem Konus und dem Schaltbereich bis zu den Absperrklappen für Roh- und Reingas entsprechen.

Durch eine Spülung mit einem Spülvielfachen größer gleich 1 wird die im Regenerator vorhandene Gasmenge zumindest theoretisch im Wesentlichen vollständig ausgetauscht, wodurch beispielweise das im Regenerator zurückbleibende Abgas aus dem Regenerator entfernt werden kann.

Insbesondere wird die Strömungsrichtung nach Ablauf der halben Spülzeit umgekehrt.

Gegebenenfalls ist vorgesehen, dass die zur Spülung verwendete Spülgasmenge, insbesondere die zur Spülung verwendete Reingas-Teilmenge, zwischen 1 % bis einschließlich 50 %, insbesondere zwischen 5 % bis einschließlich 20 %, der Gesamtreingasmenge pro Anlage entspricht, oder dass die zur Spülung verwendete Spülgasmenge, insbesondere die zur Spülung verwendete Reingas-Teilmenge, zwischen 1 % bis einschließlich 50 %, insbesondere zwischen 5 % bis einschließlich 20 %, der gesamten während des Zyklus umgesetzten Reingasmenge liegt.

Die Spülgasmenge kann vom dem zu spülenden Regeneratorvolumen, dem gewünschten Spülvielfachen und der mittleren Temperatur des Spülgases abhängig sein.

Bevorzugt ist die Spülgasmenge größer oder gleich 5 % des Nenndurchsatzes der Abgasreinigungsanlage.

Gegebenenfalls ist vorgesehen, dass der Regenerator für eine Spülzeit von 10 Sekunden bis einschließlich 480 Sekunden, insbesondere 20 Sekunden bis einschließlich 360 Sekunden, während eines Zyklus gespült wird,
und dass während des Spülens eines Zyklus eine Umkehrung der Strömungsrichtung des Spülgases nach einer vorab bestimmten Zeitdauer erfolgt.

Gegebenenfalls entspricht die Spülzeit der Dauer eines Zyklus abzüglich der Klappenschaltzeit, wobei die Klappenschaltzeit insbesondere in einem Bereich von einer Sekunde bis einschließlich fünf Sekunden liegt. Ferner kann die Spülzeit von der Anzahl der Regeneratoren der Abgasreinigungsanlage abhängig sein.

Beispielsweise kann bei einer Abgasreinigungsanlage mit drei Regeneratoren die Spülzeit im Wesentlichen der Dauer eines Zyklus abzüglich der Klappenschaltzeit entsprechen.

Beispielsweise kann bei einer Abgasreinigungsanlage mit fünf Regeneratoren die Spülzeit im Wesentlichen der Hälfte der Dauer eines Zyklus abzüglich der Klappenschaltzeit entsprechen.

Beispielsweise kann bei einer Abgasreinigungsanlage mit sieben Regeneratoren die Spülzeit im Wesentlichen einem Drittel der Dauer eines Zyklus abzüglich der Klappenschaltzeit entsprechen.

Gegebenenfalls liegt die Dauer eines Zyklus im Bereich von 60 Sekunden bis einschließlich 480 Sekunden, insbesondere im Bereich von 120 Sekunden bis einschließlich 360 Sekunden.

Wie oben beschrieben, kann daraus gegebenenfalls die Spülzeit für verschiedene Abgasreinigungsanlagen ermittelt werden.

Die Umkehr der Spülrichtung erfolgt bevorzugt nach der halben Spülzeit. Insbesondere ist vorgesehen, dass die Spülrichtung einmal, dreimal, fünfmal, siebenmal, neunmal, elfmal, dreizehnmal geändert, insbesondere umgekehrt, wird.

Die Temperatur in der Reaktionskammer zur Umsetzung, insbesondere zur rein thermischen Umsetzung, des Abgases zu Reingas kann vorzugsweise im Bereich von 700 °C bis einschließlich 1000 °C, vorzugsweise im Bereich von 800 °C bis einschließlich 960 °C, liegen. Bevorzugt beträgt die Temperatur in der Reaktionskammer bei derartigen Abgasreinigungsanlagen unterhalb von 1000 °C um eine NOx-Bildung zu vermeiden.

Bei Abgasreinigungsanlagen, welche Katalysatoren enthalten, kann die Temperatur in der Reaktionskammer zwischen 100 °C und 600 °C, vorzugsweise zwischen 250 °C und 400°C, liegen.

Gegebenenfalls ist vorgesehen, dass die Zeitdauer ein Bruchteil, insbesondere ein Zehntel, ein Achtel, ein Sechstel, ein Viertel oder bevorzugt die Hälfte, der gesamten Spülzeit beträgt.

In allen Ausführungsformen kann vorgesehen sein, dass die Spülrichtung des Regenerators unmittelbar oder direkt nach Ablauf einer bestimmten Spülzeit, insbesondere der Zeitdauer, umgekehrt wird. In allen Ausführungsformen kann vorgesehen sein, dass der Regenerator während der gesamten Spülzeit gespült wird, wobei die Spülrichtung mindestens ein Mal umgekehrt wird. In allen Ausführungsformen kann vorgesehen sein, dass der Regenerator ausschließlich oder nur während der Spülzeit gespült wird.

Nicht gemäss der Erfindung ist eine Abgasreinigungsanlage zur Durchführung des erfindungsgemäßen Verfahrens, gekennzeichnet durch eine Abgasreinigungsanlage, welche mindestens drei mit einer Reaktionskammer verbundene, wärmespeichernde Regeneratoren umfasst, wobei die Abgasreinigungsanlage mindestens eine Abgasleitung zur Zuführung des Abgases zur Abgasreinigungsanlage umfasst, wobei die Abgasreinigungsanlage mindestens eine Reingasleitung zur Abführung des Reingases aus der Abgasreinigungsanlage umfasst, wobei die Abgasreinigungsanlage mindestens eine Spülgasleitung zur Zuführung von Reingas aus der Reingasleitung und/oder zur Abführung von Reingas aus der Reaktionskammer über den zu spülenden Regenerator und/oder mindestens eine Spülgasleitung zur Zuführung von Umgebungsluft umfasst, wobei die Abgasreinigungsanlage mindestens ein Gebläse zur Förderung des Abgases, des Reingases und/oder des Spülgases umfasst, und wobei jeder Regenerator über mindestens eine Auslassabsperrvorrichtung an die mindestens eine Abgasleitung, über mindestens eine Einlassabsperrvorrichtung an die Reingasleitung und/oder über mindestens eine Spülgasabsperrvorrichtung an die Spülgasleitung angeschlossen und/oder anschließbar ist.

Bevorzugt ist die Abgasreinigungsanlage zur Durchführung des erfindungsgemäßen Verfahrens eingerichtet.

Gegebenenfalls kann die Abgasreinigungsanlage drei, fünf, sieben, neun oder mehr mit einer Reaktionskammer verbundene, wärmespeichernde Regeneratoren umfassen. Gegebenenfalls kann die Abgasreinigungsanlage eine gerade Anzahl an Regeneratoren, nämlich zwei, vier, sechs, acht, zehn oder mehr mit einer Reaktionskammer verbundene, wärmespeichernde Regeneratoren umfassen.

Gegebenenfalls ist das Gebläse an der Abgasreinigungsanlage an einer Stelle vorgesehen, an welcher die Temperatur des Gases im Vergleich zu den Temperaturen des Gases an oder in anderen Abgasreinigungsanlageteilen niedrig ist. Dadurch kann das Gebläse kleiner dimensioniert werden und benötigt im Betrieb gegebenenfalls weniger Leistung.

Gegebenenfalls ist das Gebläse an den Reingas führenden Leitungen angeordnet. Insbesondere ist das Gebläse an den Reingas führenden Leitungen angeordnet, wenn das Abgas giftige Stoffe enthält, das Abgas ein Aerosol oder einen organischen Staub enthält und/oder das Abgas korrosiv ist.

Gegebenenfalls ist vorgesehen, dass eine Steuerung vorgesehen ist, die, dem jeweiligen Zyklus entsprechend, wechselweise die Einlassabsperrvorrichtung zu mindestens einem Regenerator, die Auslassabsperrvorrichtung zu mindestens einem, insbesondere mindestens einem weiteren, Regenerator und die Spülgasabsperrvorrichtung zu mindestens einem, insbesondere zu mindestens einem anderen weiteren Regenerator öffnet und/oder schließt.

Durch diese, insbesondere automatisierte, Steuerung kann die Zuführung des Abgases, des Reingases und/oder des Spülgases in die Regeneratoren dem jeweiligen Zyklus entsprechend gemäß dem erfindungsgemäßen Verfahren erfolgen.

Ferner ist gegebenenfalls vorgesehen, dass die Steuerung auch das mindestens eine Gebläse steuert und/oder regelt.

Bei der Abgasreinigungsanlage kann zur Steuerung der Einlassabsperrvorrichtung, der Auslassabsperrvorrichtung und/oder der Spülgasabsperrvorrichtung in und/oder an mindestens einem, insbesondere jedem, Regenerator mindestens eine Messvorrichtung, beispielsweise mindestens ein Temperaturfühler zur Messung bzw. Begrenzung der Temperatur des Regenerators, vorgesehen sein. Die mindestens eine Messvorrichtung kann vorzugsweise jeweils im Bereich des Reingasauslasses des Regenerators angeordnet sein.

Insbesondere kann die Temperatur des Abgases, des Reingases und/oder des Rostes unterhalb des jeweiligen Regenerators für die Steuerung herangezogen werden. Gegebenenfalls ist vorgesehen, dass die mindestens eine Spülgasleitung mindestens eine Klappe je Regenerator und/oder mindestens ein Spülgasgebläse je Regenerator aufweist.

Gegebenenfalls ist vorgesehen, dass die Regeneratoren jeweils mindestens einen Wärmespeicher umfassen, oder dass die Regeneratoren jeweils aus mindestens einem Wärmespeicher gebildet sind.

Gegebenenfalls ist vorgesehen, dass der mindestens eine Wärmespeicher als Plattenwärmetauscher ausgebildet ist, und/oder dass der mindestens eine Wärmespeicher als, insbesondere prismatischer, Wabenkörper ausgebildet ist, und/oder dass der mindestens eine Wärmespeicher als Schüttgut ausgebildet ist, und/oder dass der mindestens eine Wärmespeicher aus Metall, Keramik oder Porzellan gebildet ist.

Gegebenenfalls ist vorgesehen, dass die mindestens eine Auslassabsperrvorrichtung, die mindestens eine Einlassabsperrvorrichtung und/oder die mindestens eine Spülgasabsperrvorrichtung an der von der Reaktionskammer abgewandten Seite angeordnet ist oder sind, und/oder dass die mindestens eine Auslassabsperrvorrichtung, die mindestens eine Einlassabsperrvorrichtung und/oder die mindestens eine Spülgasabsperrvorrichtung unterhalb des jeweiligen Wärmespeichers des jeweiligen Regenerators angeordnet ist oder sind.

Nicht gemäss der Erfindung ist die Verwendung der Abgasreinigungsanlage zur Reinigung von Abgasströmen, die mit organischen Kohlenstoffverbindungen in Form von Aerosolen, Staub, Teer, Ruß, Gasen, Dämpfen, und/oder anorganischen Verbindungen, wie insbesondere CO, H₂S, CS₂, COS, NH₃, NOx, N₂O, HCN, SiF₄, CF₄, SF₆, WF₆, belastet sind.

Weitere erfindungsgemäße Merkmale des Verfahrens ergeben sich gegebenenfalls aus den Ansprüchen, der Beschreibung der Ausführungsbeispiele und den Figuren.

Die Erfindung wird nun am Beispiel exemplarischer, nicht ausschließlicher und/oder nicht einschränkender Ausführungsbeispiele weiter erläutert.

Wenn nicht anders angegeben, so entsprechen die Bezugszeichen folgenden Komponenten:
Abgasreinigungsanlage 1, Reaktionskammer 2, Regenerator 3, Reingasauslass 4, Gebläse 5, Wärmespeicher 6, Strömungsrichtung des Abgases (während eines Zyklus) 7, Strömungsrichtung des Reingases (während eines Zyklus) 8 und Strömungsrichtung des Spülgases (während eines Zyklus) 9.

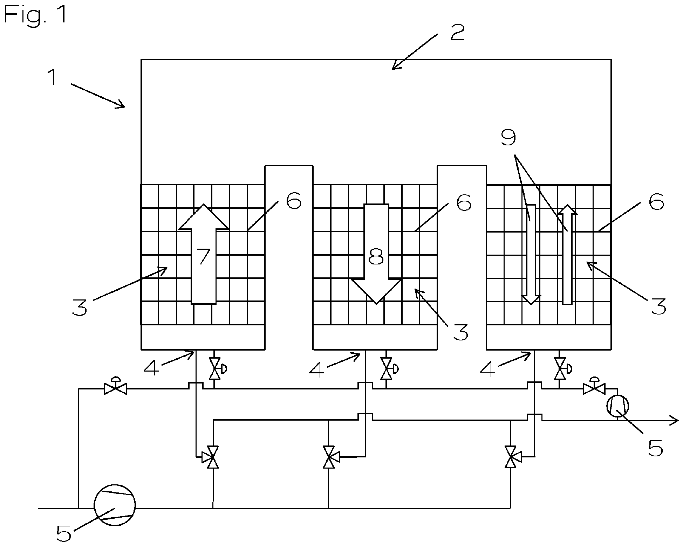

Fig. 1 zeigt eine schematische grafische Darstellung einer Abgasreinigungsanlage 1, welche zur Ausführung des erfindungsgemäßen Verfahrens eingerichtet ist.

Die Abgasreinigungsanlage 1 umfasst gemäß dieser Ausführungsform drei mit einer Reaktionskammer 2 verbundene, wärmespeichernde Regeneratoren 3. Ferner umfasst die Abgasreinigungsanlage 1 Abgasleitungen zur Zuführung des Abgases zur Abgasreinigungsanlage 1, Reingasleitungen zum Abführen des Reingases aus der Abgasreinigungsanlage 1 und Spülgasleitungen zur Zuführung von Reingas aus der Reingasleitung.

Weiteres umfasst die Abgasreinigungsanlage 1 zwei Gebläse 5 zur Förderung des Abgases, des Reingases und/oder des Spülgases.

Jeder Regenerator 3 ist gemäß dieser Ausführungsform über eine Einlassabsperrvorrichtung an die mindestens eine Abgasleitung, über eine Auslassabsperrvorrichtung an die Reingasleitung und/oder über eine Spülgasabsperrvorrichtung an die Spülgasleitung angeschlossen.

Die Abgasreinigungsanlage 1 umfasst eine Steuerung, die, dem jeweiligen Zyklus entsprechend, insbesondere automatisiert, wechselweise die Einlassabsperrvorrichtung zu wenigstens einem Regenerator 3, die Auslassabsperrvorrichtung zu wenigstens einem weiteren Regenerator 3 und die Spülgasabsperrvorrichtung zu einem anderen weiteren Regenerator 3 öffnet und/oder schließt. Durch diese Öffnung und Schließung der verschiedenen Absperrvorrichtungen ist es möglich, die Abgasreinigungsanlage 1 gemäß dem Verfahren zu betreiben.

Gemäß dieser Ausführungsform sind an der Spülgasleitung mindestens eine Klappe und/oder mindestens ein Spülgasgebläse angeordnet.

Die Regeneratoren 3 umfassen jeweils mindestens einen Wärmespeicher 6.

Die Auslassabsperrvorrichtung, die Einlassabsperrvorrichtung und die Spülgasabsperrvorrichtung des jeweiligen Regenerators 3 sind gemäß dieser Ausführungsform an der von der Reaktionskammer 2 abgewandten Seite des jeweiligen Regenerators 3 angeordnet.

Mit anderen Worten sind die Auslassabsperrvorrichtung, die Einlassabsperrvorrichtung und die Spülgasabsperrvorrichtung des jeweiligen Regenerators 3 unterhalb des jeweiligen Wärmespeichers 6 des jeweiligen Regenerators 3 angeordnet.

Nachfolgend wird ein möglicher Verfahrensablauf in der Abgasreinigungsanlage 1 überblicksmäßig beschrieben:
In einem ersten Zyklus wird das Abgas der Reaktionskammer 2 durch den ersten Regenerator 3 zugeführt, um das Abgas in der Reaktionskammer 2 zu Reingas umzusetzen. Ferner wird während des ersten Zyklus das Reingas aus der Abgasreinigungsanlage 1 durch den zweiten Regenerator 3 abgeführt, wodurch der zweite Regenerator 3 erwärmt wird. Überdies wird während des ersten Zyklus der dritte Regenerator 3 für eine Spülzeit mit Reingas gespült, um eine Verunreinigung des Reingases in einem nachfolgenden Zyklus zu vermeiden. Die Strömungsrichtung des Abgases 7, des Reingases 8 und des Spülgases 9 sind in der Figur 1 für den ersten Zyklus schematisch dargestellt.

Aus der Figur 1 ist ersichtlich, dass während des ersten Zyklus die Strömungsrichtung des Spülgases 9 im dritten Regenerator 3 mindestens einmal umgekehrt wird.

In einem zweiten Zyklus wird das Abgas dem zweiten Regenerator 3 zugeführt, dessen Wärmespeicherköper in dem ersten Zyklus erwärmt worden sind, um das Abgas in der Reaktionskammer 2 zu Reingas umzusetzen. Ferner wird während des zweiten Zyklus das Reingas durch den dritten Regenerator 3 unter Erwärmung von dessen Wärmespeicher 6 abgezogen. Überdies wird während des zweiten Zyklus der erste Regenerator 3 für eine Spülzeit mit Reingas gespült, um eine Verunreinigung des Reingases in einem nachfolgenden Zyklus zu vermeiden.

Wie auch bereits im ersten Zyklus wird zur Verbesserung des Gesamtwirkungsgrades die Strömungsrichtung des Spülgases 9 im ersten Regenerator 3 während des zweiten Zyklus mindestens einmal umgekehrt.

In einem dritten Zyklus wird das Abgas dem dritten Regenerator 3 zugeführt, dessen Wärmespeicherköper in dem zweiten Zyklus erwärmt worden sind, um das Abgas in der Reaktionskammer 2 zu Reingas umzusetzen. Ferner wird während des dritten Zyklus das Reingas durch den ersten Regenerator 3 unter Erwärmung von dessen Wärmespeicher 6 abgezogen. Überdies wird während des dritten Zyklus der zweite Regenerator 3 für eine Spülzeit mit Reingas gespült, um eine Verunreinigung des Reingases in einem nachfolgenden Zyklus zu vermeiden.

Wie auch bereits im ersten und im zweiten Zyklus wird zur Verbesserung des Gesamtwirkungsgrades die Strömungsrichtung des Spülgases 9 im zweiten Regenerator 3 während des dritten Zyklus mindestens einmal umgekehrt.

Dadurch kann ca. 50 % für das Spülen erforderliche Energie eingespart werden. Insbesondere kann, wenn die Umkehrung der Strömungsrichtung nach der halben Spülzeit erfolgt, der Energieverlust des Spülvorganges auf die Hälfte reduziert werden. Beispielweise lassen sich bei einer Abgasreinigungsanlage 1 mit 200.000 Nm³/h, einer Abgaskonzentration unterhalb des Autothermpunktes und einer Spülgasmenge von 5 % des Nenndurchsatzes mit dem erfindungsgemäßen Verfahren an die 80.000 Nm³ an Erdgas und zusätzlich 150 Tonnen CO₂ Emission pro Jahr einsparen.

Insbesondere bei Abgasreinigungsanlagen 1 mit saugseitigem Gebläse 5, wo die Spülluftleitung ohnehin mit einem separaten Gebläse 5 ausgeführt ist, bedarf es keiner zusätzlichen Ausrüstung.

Diese Konfiguration kann in allen Ausführungsformen vorgesehen sein.

Durch diese beispielhafte Konfiguration können die erfindungsgemäßen Effekte erzielt werden.

Die Erfindung beschränkt sich nicht auf die dargestellte Ausführungsform, sondern umfasst jegliches Verfahren gemäß den nachfolgenden Patentansprüchen.

## Patentansprüche

1. Verfahren zur Reinigung von Abgas mit einer Abgasreinigungsanlage (1),
- wobei die Abgasreinigungsanlage (1) mindestens drei mit einer Reaktionskammer (2) verbundene, wärmespeichernde Regeneratoren (3) umfasst,
- wobei das Abgas in Zyklen wechselweise den Regeneratoren (3) zugeführt wird,
und wobei ein Zyklus des Verfahrens folgende Schritte umfasst:
- Zuführen des Abgases zur Reaktionskammer (2) durch mindestens einen Regenerator (3), welcher in einem vorhergehenden Zyklus erwärmt worden ist, um das Abgas in der Reaktionskammer (2) zu Reingas umzusetzen,
- Abführen des Reingases aus der Abgasreinigungsanlage (1) durch mindestens einen weiteren Regenerator (3), wodurch der mindestens eine weitere Regenerator (3) erwärmt wird,
- Spülen mindestens eines anderen weiteren Regenerators (3) mit Spülgas, insbesondere mit Reingas, um eine Verunreinigung des Reingases in einem nachfolgenden Zyklus zu vermeiden,
und wobei der gespülte Regenerator (3), insbesondere dessen Speichermasse, während eines Zyklus als Wärmespeicher für den Wärmetausch genutzt wird,
- wobei der Regenerator (3) zur Spülung während eines Zyklus bei der Durchströmung in eine erste Strömungsrichtung Wärme aus dem Spülgas aufnimmt und bei der Durchströmung in eine zweite Strömungsrichtung wieder Wärme an das Spülgas abgibt
- insbesondere wobei dadurch die vom Spülgas an den Regenerator (3) abgegebene Wärme im Wesentlichen vollständig in die Reaktionskammer (2) zurückgeführt wird,
**dadurch gekennzeichnet,**
- **dass** während des Zyklus die Strömungsrichtung des Spülgases (9) mindestens einmal umgekehrt wird,
- **und dass** der Regenerator (3), während eines Zyklus, zur Spülung zuerst von der Reaktionskammer (2) in Richtung seines Reingasauslasses (4) mit Spülgas durchströmt wird,
- **und dass** derselbe Regenerator (3), während desselben Zyklus, zur Spülung danach oder anschließend von dem Reingasauslass (4) in Richtung der Reaktionskammer (2) mit Spülgas durchströmt wird.

2. Verfahren nach Anspruch 1, **dadurch gekennzeichnet, dass** der Regenerator (3), während eines Zyklus, zur Spülung zuerst mit, insbesondere ungekühltem, Reingas direkt aus der Reaktionskammer (2) gespült wird.

3. Verfahren nach Anspruch 2, **dadurch gekennzeichnet,**
- **dass** derselbe Regenerator (3), während desselben Zyklus, zur Spülung danach oder anschließend mit aus der Abgasreinigungsanlage (1) abgeführtem, insbesondere durch den mindestens einen weiteren Regenerator (3) gekühltem, Reingas gespült wird,
- **und/oder dass** derselbe Regenerator (3), während desselben Zyklus, zur Spülung danach oder anschließend mit, insbesondere aus der Umgebung, zugeführter Frischluft gespült wird.

4. Verfahren nach einem der vorhergehenden Ansprüche, **dadurch gekennzeichnet,**
- **dass** der Regenerator (3) in eine Strömungsrichtung, insbesondere in die Richtung seines Reingasauslasses (4), mit einem Spülvielfachen von größer gleich 1, insbesondere mit einem Spülvielfachen von 1,5 bis einschließlich 20, gespült wird, wobei unter dem Spülvielfachen ein Vielfaches des Regeneratorvolumens, insbesondere ein Vielfaches des durchströmbaren beziehungsweise freien Regeneratorvolumens, verstanden wird,
- **und dass** derselbe Regenerator (3), insbesondere nach Ablauf der halben Spülzeit, in eine andere, insbesondere in eine zu der Strömungsrichtung entgegengesetzte, Strömungsrichtung, insbesondere in die Richtung der Reaktionskammer (2), mit einem Spülvielfachen von größer gleich 1, insbesondere mit einem Spülvielfachen von 1,5 bis einschließlich 20, gespült wird.

5. Verfahren nach einem der vorhergehenden Ansprüche, **dadurch gekennzeichnet,**
- **dass** die zur Spülung verwendete Spülgasmenge, insbesondere die zur Spülung verwendete Reingas-Teilmenge, zwischen 1 % bis einschließlich 50 %, insbesondere zwischen 5 % bis einschließlich 20 %, der Gesamtreingasmenge der Abgasreinigungsanlage (1) entspricht,
- **oder dass** die zur Spülung verwendete Spülgasmenge, insbesondere die zur Spülung verwendete Reingas-Teilmenge, zwischen 1 % bis einschließlich 50 %, insbesondere zwischen 5 % bis einschließlich 20 %, der gesamten während des Zyklus umgesetzten Reingasmenge liegt.

6. Verfahren nach einem der vorhergehenden Ansprüche, **dadurch gekennzeichnet,**
- **dass** der Regenerator (3) für eine Spülzeit von 10 Sekunden bis einschließlich 480 Sekunden, insbesondere 20 Sekunden bis einschließlich 360 Sekunden, während eines Zyklus gespült wird,
- **und dass** während des Spülens eines Zyklus eine Umkehrung der Strömungsrichtung des Spülgases (9) nach einer vorab bestimmten Zeitdauer erfolgt.

7. Verfahren nach Anspruch 6, **dadurch gekennzeichnet, dass** die Zeitdauer ein Bruchteil, insbesondere ein Zehntel, ein Achtel, ein Sechstel, ein Viertel oder bevorzugt die Hälfte, der gesamten Spülzeit beträgt.

## Claims

1. A method for purifying waste gas with a waste gas purification system (1),
- wherein the waste gas purification system (1) comprises at least three heat-storing regenerators (3) connected to a reaction chamber (2),
- wherein the waste gas is alternately fed to the regenerators (3) in cycles,
and wherein one cycle of the method comprises the following steps:
- feeding the waste gas to the reaction chamber (2) through at least one regenerator (3), which has been heated in a previous cycle to convert the waste gas in the reaction chamber (2) to clean gas,
- discharging the clean gas from the waste gas purification system (1) through at least one further regenerator (3), whereby the at least one further regenerator (3) is heated,
- purging at least one other further regenerator (3) with purge gas, in particular with clean gas, in order to avoid contamination of the clean gas in a subsequent cycle,
and wherein the purged regenerator (3), in particular its storage mass, is used as a heat storage medium for the heat exchange during a cycle,
- wherein the regenerator (3) for purging takes up heat from the purge gas during a cycle when flowing through in a first flow direction and releases heat to the purge gas again when flowing through in a second flow direction
- in particular wherein the heat transmitted from the purge gas to the regenerator (3) is thereby essentially completely returned to the reaction chamber (2),
**characterized**
- **in that** the flow direction of the purge gas (9) is reversed at least once during the cycle,
- **and in that** during a cycle, for purging, purge gas first flows through the regenerator (3) from the reaction chamber (2) in the direction of its clean gas outlet (4),
- **and in that** purge gas flows through the same regenerator (3), during the same cycle, for purging thereafter or subsequently from the clean gas outlet (4) in the direction of the reaction chamber (2).

2. The method according to claim 1, **characterised in that** the regenerator (3) during a cycle is first purged with, in particular uncooled, clean gas directly from the reaction chamber (2).

3. The method of claim 2, **characterized**
- **in that** the same regenerator (3), during the same cycle, for purging is thereafter or subsequently purged with clean gas that is discharged from the waste gas purification system (1) and in particular cooled by the at least one further regenerator (3),
- **and/or that** the same regenerator (3), during the same cycle, for purging is thereafter or subsequently purged with fresh air, in particular supplied from the environment.

4. The method according to one of the preceding claims, **characterised**
- **in that** the regenerator (3) is purged in a flow direction, in particular in the direction of its clean gas outlet (4), with a purge multiple of greater than or equal to 1, in particular with a purge multiple of 1.5 up to and including 20, the purge multiple being understood to be a multiple of the regenerator volume, in particular a multiple of the purgeable or free regenerator volume
- **and in that** the same regenerator (3), in particular after half the purging time has elapsed, is purged in a different flow direction, in particular in a flow direction opposite to the flow direction, in particular in the direction of the reaction chamber (2), with a purge multiple of greater than or equal to 1, in particular with a purge multiple of 1.5 up to and including 20.

5. The method according to one of the preceding claims, **characterised**
- **in that** the amount of purge gas used for purging, in particular the partial amount of clean gas used for purging, ranges from 1 % up to and including 50 %, in particular from 5 % up to and including 20 %, of the total quantity of clean gas in the waste gas purification system (1),
- **or in that** the amount of purge gas used for purging, in particular the partial amount of clean gas used for purging, ranges from 1 % up to and including 50 %, in particular from 5 % up to and including 20 %, of the total amount of clean gas converted during the cycle.

6. The method according to one of the preceding claims, **characterised**
- **in that** the regenerator (3) is purged for a purging time of 10 seconds up to and including 480 seconds, in particular 20 seconds up to and including 360 seconds, during a cycle,
- **and in that** during the purging of a cycle, the direction of flow of the purging gas (9) is reversed after a predetermined period of time.

7. The method of claim 6, **characterized in that** the period of time is a fraction, in particular a tenth, an eighth, a sixth, a quarter or preferably half, of the total purging time.

## Revendications

1. Procédé de purification des gaz d'échappement avec une installation de purification des gaz d'échappement (1),
- dans lequel l'installation de purification des gaz d'échappement (1) comprend au moins trois régénérateurs (3) accumulant la chaleur et reliés à une chambre de réaction (2),
- les gaz d'échappement étant amenés en alternance aux régénérateurs (3) au cours de cycles,
et dans lequel un cycle du procédé comprend les étapes suivantes:
- amener les gaz d'échappement à la chambre de réaction (2) par au moins un régénérateur (3) qui a été chauffé dans un cycle précédent pour convertir les gaz d'échappement en gaz purifié dans la chambre de réaction (2),
- évacuer le gaz purifié de l'installation de purification des gaz d'échappement (1) par au moins un autre régénérateur (3), ce qui permet de chauffer ledit au moins un autre régénérateur (3),
- purger au moins un autre régénérateur (3) avec du gaz de purge, en particulier du gaz purifié, afin d'éviter une contamination du gaz purifié dans un cycle suivant,
et le régénérateur (3) purgé, en particulier sa masse d'accumulation, étant utilisé pendant un cycle comme accumulateur de chaleur pour l'échange de chaleur,
- le régénérateur (3) pour la purge absorbant de la chaleur du gaz de purge pendant un cycle lors du passage dans une première direction d'écoulement et cédant à nouveau de la chaleur au gaz de purge lors du passage dans une deuxième direction d'écoulement,
- en particulier, la chaleur cédée par le gaz de purge au régénérateur (3) étant ainsi sensiblement entièrement réintroduite dans la chambre de réaction (2),
**caractérisé**
- **en ce que,** pendant le cycle, direction d'écoulement du gaz de purge (9) est inversé au moins une fois,
- **et en ce que** le régénérateur (3), pendant un cycle, est traversé pour la purge par le gaz de purge d'abord à partir de la chambre de réaction (2) en direction de sa sortie de gaz purifié (4),
- **et en ce que** le même régénérateur (3), pendant le même cycle, est traversé pour la purge après ou ensuite par le gaz de purge à partir de la sortie de gaz purifié (4) en direction de la chambre de réaction (2).

2. Procédé selon la revendication 1, **caractérisé en ce que** le régénérateur (3), pendant un cycle, pour la purge, est d'abord purgé avec du gaz purifié, en particulier non refroidi, directement à partir de la chambre de réaction (2).

3. Le procédé selon la revendication 2, **caractérisé**
- **en ce que** le même régénérateur (3), pendant le même cycle, pour la purge, est purgé après ou ensuite avec du gaz purifié évacué de l'installation de purification des gaz d'échappement (1), en particulier refroidi par l'au moins un autre régénérateur (3),
- **et/ou en ce que** le même régénérateur (3), pendant le même cycle, pour la purge, est purgé après ou ensuite avec de l'air frais amené en particulier de l'environnement.

4. Procédé selon l'une des revendications précédentes, **caractérisé**
- **en ce que** le régénérateur (3) est purgé dans une direction d'écoulement, en particulier dans la direction de sa sortie de gaz purifié (4), avec un multiple de purge supérieur ou égal à 1, en particulier avec un multiple de purge de 1,5 à 20 inclus, le multiple de purge étant compris comme un multiple du volume du régénérateur, en particulier comme un multiple du volume du régénérateur traversable ou libre
- **et en ce que** le même régénérateur (3), en particulier après écoulement de la moitié du temps de purge, est purgé dans une autre direction d'écoulement, en particulier dans une direction opposée à la direction d'écoulement, en particulier dans la direction de la chambre de réaction (2), avec un multiple de purge supérieur ou égal à 1, en particulier avec un multiple de purge de 1,5 à 20 inclus.

5. Procédé selon l'une des revendications précédentes, **caractérisé**
- **en ce que** la quantité de gaz de purge utilisée pour la purge, en particulier la quantité partielle de gaz purifié utilisée pour la purge, correspond entre 1 % et 50 % inclus, en particulier entre 5 % et 20 % inclus, de la quantité totale de gaz purifié de l'installation de purification des gaz d'échappement (1),
- **ou en ce que** la quantité de gaz de purge utilisée pour la purge, en particulier la quantité partielle de gaz purifié utilisée pour la purge, est comprise entre 1 % et 50 % inclus, en particulier entre 5 % et 20 % inclus, de la quantité totale de gaz purifié transformée pendant le cycle.

6. Procédé selon l'une des revendications précédentes, **caractérisé**
- **en ce que** le régénérateur (3) est purgé pendant une durée de purge de 10 secondes à 480 secondes incluses, en particulier de 20 secondes à 360 secondes incluses, pendant un cycle,
- **et en ce que,** pendant la purge d'un cycle, une inversion du direction d'écoulement du gaz de purge (9) a lieu après une durée prédéterminée.

7. Procédé selon la revendication 6, **caractérisé en ce que** la durée est une fraction, en particulier un dixième, un huitième, un sixième, un quart ou de préférence la moitié, de la durée totale de purge.
